# EUROPÄISCHE PATENTSCHRIFT

(11) **EP 2 703 773 B1**
(45) Veröffentlichungstag und Bekanntmachung des Hinweises auf die Patenterteilung: **24.12.2014**
(21) Anmeldenummer: 12006112.2
(22) Anmeldetag: 28.08.2012
(51) Int. Cl.: H04N 5/235, G01B 11/00

(54) **Sensor zum Erfassen einer laufenden Warenbahn**
Sensor for detecting a moving strip
Capteur destiné à détecter une bande de marchandise déroulante

(43) Veröffentlichungstag der Anmeldung: 05.03.2014
(73) Patentinhaber: Texmag GmbH Vertriebsgesellschaft, 8800 Thalwil (CH)
(72) Erfinder: Eisen, Jürgen, 86199 Augsburg (DE); Zwerger, Lars, 86163 Augsburg (DE)
(74) Vertreter: Witzany, Manfred

(56) Entgegenhaltungen:
- EP-A1- 2 157 401
- EP-B1- 1 154 225
- DE-A1- 4 131 365
- US-A- 4 210 401
- US-A1- 2007 153 285

## Beschreibung

Die Erfindung betrifft eine Vorrichtung bestehend aus einer laufenden Warenbahn und einem Sensor zum Erfassen der Lage der laufenden Warenbahn.

Aus der US 2007/0153285 A1 ist ein Ellipsometer zur Bestimmung der optischen Reflektionseigenschaften von Proben bekannt. Dieses Ellipsometer kann mit unterschiedlichen Laser-Lichtquellen betrieben werden, um eine Wellenlängen abhängige Analyse zu ermöglichen. Der Lichteinfall erfolgt dabei streifend, so dass das einfallende Licht zur Normalen auf die Probenoberfläche einen Winkel von fast 90° einschließt. Das reflektierte Licht wird mittels einer Linsenanordnung auf einen Detektor fokussiert, der den integralen Lichtstrom erfasst. Dabei wird die zu untersuchende Probe als homogen über die untersuchte Oberfläche angenommen, so dass keinerlei Markierungen oder Randkanten erfassbar sind.

Aus der US 4,210,401 ist ein weiteres Ellipsometer bekannt, bei dem der Einfallswinkel und Reflektionswinkel des Lichtes in einem Bereich zwischen 0° und nahezu 90° zur Normalen auf einer Probenoberfläche variiert werden kann. Auch dieses Ellipsometer setzt eine homogene zu untersuchende Probe voraus, so dass eine Erfassung von Markierungen oder Randkanten nicht möglich ist.

Aus der EP 2 157 401 A1 ist eine Vorrichtung zur Abstandsmessung bekannt. Diese besteht aus einer Lichtquelle und einem Lichtdetektor, die über einen Strahlteiler entkoppelt sind. Dabei sendet die Lichtquelle Licht durch den Strahlteiler hindurch auf eine zu untersuchende Probe. Von dieser reflektiertes Licht wird vom Strahlteiler reflektiert und zu einem Detektor geleitet. Durch Erfassung der Zeitverzögerung der am Detektor ankommenden Signale wird der Abstand der Probe von dieser Vorrichtung ermittelt.

Aus der EP 1 154 225 B1 ist ein gattungsgemäßer Sensor zum Erfassen einer Randkante bzw. einer Markierung einer laufenden Warenbahn bekannt. Dieser Sensor weist eine gerichtete und eine diffuse Lichtquelle auf, die die Warenbahn beleuchten. Das von der Warenbahn reflektierte Licht wird von einem Lichtdetektor erfasst und in ein elektrisches Signal umgewandelt. Dieser Sensor hat sich in der Praxis vielfach bewährt und bildet den Ausgangspunkt der vorliegenden Erfindung.

Aus der DE 41 31 365 A1 ist eine Vorrichtung zur Lageerfassung einer laufenden Warenbahn anhand eines Sprunges in der Warenbahndicke bekannt. Dabei wird die Warenbahn von zwei unterschiedlichen Strahlungsrichtungen mit Licht bestrahlt und von einer oder zwei Videokameras erfasst. Die von der Videokamera erzeugten Bilder zeigen einen Unterschied zwischen den verschiedenen Beleuchtungsvarianten aufgrund des Schattenwurfs des Dickensprungs in der Warenbahn. Durch Anwendung unterschiedlich polarisierten Lichtes kann die Warenbahn außerdem gleichzeitig mit beiden Lichtquellen beleuchtet werden. Im reflektierten Licht werden dann Polarisationsfilter vorgesehen, die das Licht beider Lichtquellen wieder entsprechend trennen. Dies führt zu einer Verdoppelung der Sensorgeschwindigkeit.

Der Erfindung liegt die Aufgabe zugrunde, eine Vorrichtung der eingangs genannten Art zu schaffen, die auch unter ungünstigen Bedingungen eine sichere Erfassung der Bahnkante oder einer Markierung der Warenbahn ermöglicht.

Diese Aufgabe wird erfindungsgemäß mit den Merkmalen des Patentanspruchs 1 gelöst.

Eine Vorrichtung gemäß Anspruch 1 dient zum Erfassen einer laufenden Warenbahn, nämlich der Lage der Warenbahn anhand ihrer Kante oder einer auf der Warenbahn vorgesehenen Markierung. Der Sensor weist Lichtquellen auf, welche Emissionslicht gegen die Warenbahn senden. Es spielt dabei keine Rolle, ob diese Lichtquellen selbst gegen die Warenbahn gerichtet sind oder durch optische Mittel wie beispielsweise Spiegel, Prismen, Linsen oder dergleichen das Emissionslicht derart umgelenkt wird, dass es letzten Endes auf die Warenbahn trifft. Entscheidend ist lediglich, dass wenigstens ein Teilbereich der Warenbahn durch das Emissionslicht beleuchtet wird. Der Sensor weist außerdem mindestens einen Lichtdetektor auf, der Detektionslicht empfängt. Dieses Detektionslicht wird dabei von der mindesten einen Lichtquelle ausgesendet und von der Warenbahn beeinflusst. Als Beeinflussung kommen insbesondere Reflektion, Absorption und Transmission in Betracht. Diese hängen sowohl von den optischen Eigenschaften als auch von der relativen Lage der Warenbahn zum auftreffenden Emissionslicht ab. Damit ist es grundsätzlich möglich, aus dem von der Warenbahn reflektierten oder transmittierten Detektionslicht die Lage der Warenbahn zu erfassen.

In ungünstigen Fällen kann es jedoch vorkommen, dass die Abhängigkeit des Detektionslichts von der Lage der laufenden Warenbahn zu gering ist, um die Lage der Warenbahn aus dem Detektionslicht zu ermitteln. Soll beispielsweise die Lage eines auf der Warenbahn vorgesehenen Metallstreifens erfasst werden, wobei die gesamte Warenbahn mit Klarlack besprüht ist, so ergibt sich zwischen dem Metallstreifen und der übrigen Warenbahn nur ein recht geringer Kontrast, der einer sicheren Erfassung der Lage des Metallstreifens entgegensteht. Um auch unter diesen erschwerten Umständen eine sichere Erfassung der Lage der Warenbahn zu ermöglichen, sind die Lichtquellen in der Lage, Emissionslicht mit unterschiedlicher Polarisation auszusenden. Vorzugsweise ist das Emissionslicht wenigstens einer der Lichtquellen parallel zur Ebene der Warenbahn polarisiert, während das Emissionslicht mindestens einer anderen Lichtquelle senkrecht zur Ebene der Warenbahn polarisiert ist. Diese Ausrichtungen sind jedoch nicht zwingend. Entscheidend ist lediglich, dass die Polarisationseigenschaften als solche unterschiedlich sind. Damit kann die Polarisation des Emissionslichts insgesamt durch Ansteuern der Lichtquellen variiert werden. Ausgehend vom oben genannten Beispiel können die Lichtquellen beispielsweise so angesteuert werden, dass das Emissionslicht nur senkrecht polarisiert ist. Durch Ansteuern der Lichtquellen mit paralleler Polarisation ist dagegen das Emissionslicht parallel polarisiert. Durch gleichzeitiges Ansteuern unterschiedlich polarisierter Lichtquellen ist es auch möglich, diese Polarisationsrichtungen zu mischen. Dabei spielt es grundsätzlich keine Rolle, ob die Lichtquellen bereits selbst polarisiertes Licht aussenden oder deren unpolarisiertes Licht durch optische Mittel polarisiert wird. Durch geeignete Wahl des Polarisationszustandes mit Hilfe der Ansteuerung der Lichtquellen kann auch unter ungünstigen Bedingungen eine Markierung der laufenden Warenbahn sicher abgetastet werden. Insbesondere ist daran gedacht, die Emissionsleistung der Lichtquellen derart zu variieren, dass ein ausgewähltes Führungskriterium der laufenden Warenbahn einen optimalen Kontrast erzeugt.

Die wenigsten praxistauglichen Lichtquellen liefern polarisiertes Emissionslicht. Deshalb ist es gemäß Anspruch 2 vorteilhaft, wenn zwischen der mindestens einen Lichtquelle und dem mindestens einen Lichtdetektor mindestens ein Polarisationsfilter vorgesehen ist. Auch hier ist wiederum "zwischen" als "im Strahlengang befindlich" zu verstehen. Der mindestens eine Polarisationsfilter kann zwischen der mindestens einen Lichtquelle und der Warenbahn oder zwischen der Warenbahn und dem mindestens einen Lichtdetektor angeordnet sein. Sind mehrere Polarisationsfilter vorgesehen, können diese auch zu beiden Seiten der Warenbahn angeordnet sein. Als Polarisationsfilter kommen beispielsweise Kunststoffschichten mit ausgerichteten Polymerketten in Frage, welche Licht einer bestimmten Polarisationsrichtung absorbieren. Alternativ könnten auch Polarisationseigenschaften an dielektrischen und/oder metallischen Grenzflächen als Polarisationsfilter eingesetzt werden.

Alternativ oder zusätzlich ist es gemäß Anspruch 3 vorteilhaft, wenn die mindestens eine Lichtquelle derart ausgebildet ist, dass das Emissionslicht linear polarisiert ist. Damit ist ein zusätzlicher Polarisationsfilter entbehrlich. Ein Beispiel für eine linear polarisierte Lichtquelle ist ein Gaslaser, der eine Gasküvette mit schräg gestellten Fenstern innerhalb eines Laserresonators aufweist. Ein derartiger Gaslaser kann nur linear polarisiertes Licht abgeben.

Trifft das Emissionslicht oder das Transmissionslicht gemäß Anspruch 4 in einem spitzen Winkel auf eine Normale der Warenbahn auf diese, so ergibt sich insbesondere bei dielektrischen Warenbahnen oder Warenbahnen mit dielektrischen Deckschichten, wie beispielsweise Klarlackschichten, eine starke Abhängigkeit der Lichtreflektion von der Polarisationsrichtung. Damit können schwierige Warenbahnen durch geeignete Wahl der Polarisationsrichtung bzw. einer entsprechenden Mischung aus verschiedenen Polarisationsrichtungen gut abgetastet werden.

Für den spitzen Winkel hat sich gemäß Anspruch 5 der Brewsterwinkel bewährt. Dieser hängt nur vom Brechungsindex des dielektrischen Mediums ab. Trifft Licht genau im Brewsterwinkel auf die Warenbahn auf, so wird Licht mit parallel zur Warenbahn ausgerichteter Polarisationsrichtung nicht reflektiert. Das gesamte reflektierte Licht stammt daher ausschließlich von der senkrecht zur Warenbahn ausgerichteten Polarisation. Nahe dem Brewsterwinkel ist diese Bedingung zwar nicht mehr zu 100% erfüllt, die Reflektion der parallelen Polarisation ist jedoch in diesem Bereich äußerst gering. Damit ist es nicht notwendig, den Brewsterwinkel exakt zu treffen, man erhält vielmehr auch in einem Bereich um den Brewsterwinkel eine sehr starke Polarisationsabhängigkeit der Reflektion. Damit besitzt das Detektionslicht in diesem Bereich des Einfallswinkels eine besonders starke Polarisationsabhängigkeit und kann daher gut vom Polarisationselement beeinflusst werden. Beispielsweise ist es auf diese Weise möglich, die Reflektion des Klarlacks komplett auszuschalten.

Der Erfindungsgegenstand wird beispielhaft anhand der Zeichnung erläutert, ohne den Schutzumfang zu beschränken.

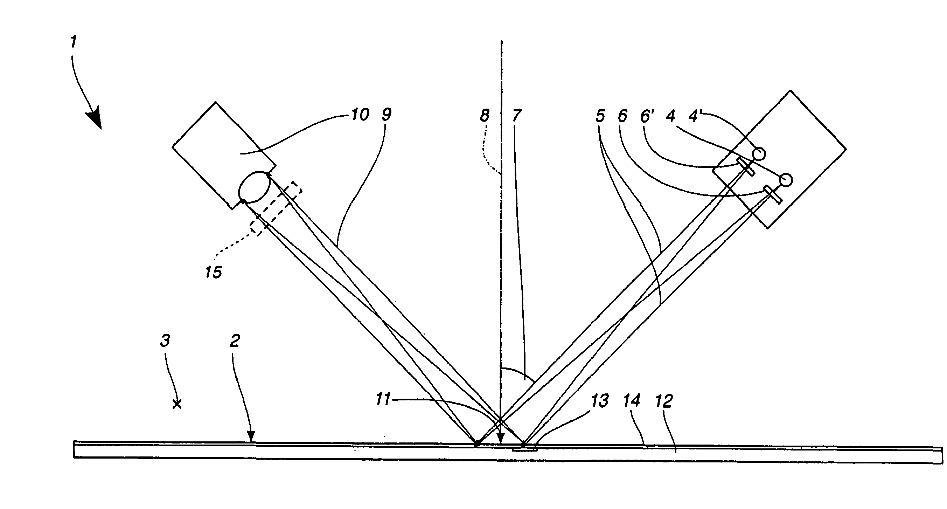

Die einzige Figur zeigt eine schematische Prinzipdarstellung eines Sensors 1. Ein Sensor 1 gemäß Figur 1 dient zum Erfassen einer laufenden Warenbahn 2, die sich entlang einer zum Betrachter gerichteten Laufrichtung 3 bewegt. Der Sensor 1 weist zwei Lichtquellen 4, 4' auf, die Emissionslicht 5 aussenden. Den Lichtquellen 4, 4' ist jeweils ein Polarisationsfilter 6, 6' nachgeordnet, die linear polarisiertes Emissionslicht 5 erzeugen. Das auf diese Weise polarisierte Emissionslicht 5 trifft in einem spitzen Winkel 7 gemessen zu einer Normalen 8 auf die Warenbahn 2. Ein Teil des auftreffenden Lichtes wird von der Warenbahn 2 reflektiert, wobei die Reflektivität sowohl vom Polarisationszustand des auftreffenden Lichtes als auch von Materialeigenschaften der Warenbahn 2 abhängt. Das reflektierte Detektionslicht 9 gelangt schließlich zu einem Lichtdetektor 10, der beispielsweise als Kamera ausgebildet ist. Optional kann vor dem Lichtdetektor 10 noch ein weiterer Polarisationsfilter 15 vorgesehen sein. Damit lässt sich ein Ausschnitt 11 der Warenbahn ortsaufgelöst erfassen.

Im Ausführungsbeispiel gemäß Figur 1 besteht die Warenbahn 2 beispielhaft aus einem polymeren Träger 12, in den ein Metallstreifen 13 eingelassen ist. Dieser Metallstreifen 13 besteht beispielsweise aus Aluminium, kann jedoch alternativ auch aus jedem anderen Metall gefertigt sein. Dieser Metallstreifen 13 soll vom Sensor 1 erkannt werden, damit die Warenbahn 2 nach der Lage des Metallstreifens 13 geführt wird. Dies könnte grundsätzlich durch geeignete Wahl entsprechend einer Hellfeld- oder Dunkelfeldbeleuchtung erzielt werden. Im vorliegenden Ausführungsbeispiel ist die Warenbahn 2 jedoch zusätzlich oberseitig mit einem Klarlack 14 versehen. Dieser Klarlack 14 bildet eine dielektrische Schicht an der Oberfläche der Warenbahn 2, so dass sowohl die Hellfeldbeleuchtung als auch die Dunkelfeldbeleuchtung bei dieser Warenbahnart versagen.

Um dennoch die Lage des Metallstreifens 13 im Lichtdetektor 10 zu erfassen, werden die Lichtquellen 4, 4' variabel angesteuert. Auf diese Weise ergeben sich unterschiedliche Polarisationszustände des Emissionslichts 5. Auf diese Weise kann die Polarisation des Emissionslichtes 5 derart verstellt werden, dass der Metallstreifen 13 kontrastreich im Lichtdetektor 10 erfassbar ist.

### Bezugszeichenliste

- 1: Sensor
- 2: Warenbahn
- 3: Laufrichtung
- 4, 4': Lichtquelle
- 5: Emissionslicht
- 6, 6': Polarisationsfilter
- 7: spitzer Winkel
- 8: Normale
- 9: Detektionslicht
- 10: Lichtdetektor
- 11: Ausschnitt
- 12: polymerer Träger
- 13: Metallstreifen
- 14: Klarlack
- 15: Polarisationsfilter

## Patentansprüche

1. Vorrichtung bestehend aus einer laufenden Warenbahn (2) und einem Sensor (1) zum Erfassen der Lage der laufenden Warenbahn (2) anhand einer darauf vorgesehen Markierung, wobei der Sensor (1) Emissionslicht (5) gegen die Warenbahn (2) sendende Lichtquellen (4, 4') und mindestens einen Lichtdetektor (10) aufweist, welcher Detektionslicht (9) empfängt, welches von der mindestens einen Lichtquelle (4) ausgesendet und von der Warenbahn (2) beeinflusst ist, **dadurch gekennzeichnet, dass** die Lichtquellen (4, 4') derart ausgebildet sind, daß sie Emissionslicht (5) mit unterschiedlicher Polarisation aussenden können, so dass das gesamte Emissionslicht (5) in seiner Polarisation durch Ansteuern der Lichtquellen (4, 4') derart variierbar ist und, dass zwischen der laufenden Warenbahn (2) und der darauf vorgesehenen Markierung ein optimaler Kontrast erzeugt wird und der mindestens eine Lichtdetektor (10) als Kamera ausgebildet ist.

2. Vorrichtung nach Anspruch 1, **dadurch gekennzeichnet, dass** zwischen den Lichtquellen (4, 4') und dem mindestens einen Lichtdetektor (10) mindestens ein Polarisationsfilter (6, 15) vorgesehen ist.

3. Vorrichtung nach Anspruch 1 oder 2, **dadurch gekennzeichnet, dass** mindestens eine der Lichtquellen (4, 4') derart ausgebildet ist, dass sie linear polarisiertes Emissionslicht (5)aussendet.

4. Vorrichtung nach einem der Ansprüche 1 bis 3, **dadurch gekennzeichnet, dass** das Emissionslicht (5) in einem spitzen Winkel (7) auf eine Normale (8) der Warenbahn (2) auf diese auftrifft.

5. Vorrichtung nach Anspruch 4, **dadurch gekennzeichnet, dass** der spitze Winkel (7) in etwa dem Brewsterwinkel entspricht.

## Claims

1. Apparatus comprising a moving product web (2) and a sensor (1) for detecting the position of the moving product web (2) by using a marking provided on the latter, the sensor (1) having light sources (4, 4') transmitting emission light (5) towards the product web (2) and at least one light detector (10), which receives detection light (9), which is emitted by the at least one light source (4) and is influenced by the product web (2), **characterized in that** the light sources (4, 4') are designed in such a way that they are able to transmit emission light (5) with different polarization, so that the polarization of all of the emission light (5) can be varied by driving the light sources (4, 4') in such a way that optimal contrast is produced between the moving product web (2) and the marking provided on the latter, and the at least one light detector (10) is formed as a camera.

2. Apparatus according to Claim 1, **characterized in that** at least one polarization filter (6, 15) is arranged between the light sources (4, 4') and the at least one light detector (10).

3. Apparatus according to Claim 1 or 2, **characterized in that** at least one of the light sources (4, 4') is formed in such a way that it emits linearly polarized emission light (5).

4. Apparatus according to one of Claims 1 to 3, **characterized in that** the emission light (5) strikes the product web (2) at an acute angle (7) to a normal (8) thereto.

5. Apparatus according to Claim 4, **characterized in that** the acute angle (7) corresponds approximately to the Brewster angle.

## Revendications

1. Dispositif composé d'une bande de marchandise (2) déroulante et d'un capteur (1) destiné à détecter la position de la bande de marchandise (2) déroulante à l'aide d'un marquage prévu dessus, le capteur (1) comportant une lumière émise (5) provenant des sources lumineuses (4, 4') émettant contre la bande de marchandise (2) ainsi qu'au moins un détecteur de lumière (10) recevant la lumière de détection (9) envoyée par l'au moins une source lumineuse (4) et influencée par la bande de marchandise (2), **caractérisé en ce que** les sources lumineuses (4, 4') sont réalisées de telle sorte qu'elles peuvent envoyer la lumière émise (5) avec une polarisation différente, de sorte que la totalité de la lumière émise (5) peut varier dans sa polarisation par excitation des sources lumineuses (4, 4') et qu'un contraste optimal est produit entre la bande de marchandise (2) déroulante et le marquage prévu dessus et que l'au moins un détecteur de lumière (10) prend la forme d'une caméra.

2. Dispositif selon la revendication 1, **caractérisé en ce qu'**au moins un filtre de polarisation (6, 15) est prévu entre les sources lumineuses (4, 4') et l'au moins un détecteur de lumière (10).

3. Dispositif selon la revendication 1 ou 2, **caractérisé en ce qu'**au moins une des sources lumineuses (4, 4') est réalisée de telle sorte qu'elle émet la lumière émise (5) polarisée de façon linéaire.

4. Dispositif selon une des revendications 1 à 3, **caractérisé en ce que** la lumière émise (5) croise une normale (8) à la bande de marchandise (2) en formant un angle aigu (7).

5. Dispositif selon la revendication 4, **caractérisé en ce que** l'angle aigu (7) correspond approximativement à l'angle de Brewster.
